# EUROPEAN PATENT SPECIFICATION

(11) **EP 3 882 446 B1**
(45) Date of publication and mention of the grant of the patent: **24.04.2024**
(21) Application number: 21162608.0
(22) Date of filing: 15.03.2021
(51) Int. Cl.: F02C 7/25, F01D 21/12, G01K 1/14

(54) **RAIL AND TUBE ASSEMBLY**
SCHIENEN- UND ROHRANORDNUNG
ENSEMBLE RAIL ET TUBE

(30) Priority: 16.03.2020 IN 202011011270
(43) Date of publication of application: 22.09.2021
(73) Proprietor: Kidde Technologies, Inc., Wilson, NC 27896 (US)
(72) Inventor: LAKSHMI, Venkata Satish Babu, 560066 Karnataka (IN); MOTHE, Venkata Anil Kumar, 560066 Karnataka (IN)
(74) Representative: Dehns

(56) References cited:
- US-A1- 2015 214 702
- US-A1- 2019 113 391
- US-A1- 2020 064 202

## Description

This application claims the benefit of IN Provisional Application No. 202011011270 filed March 16, 2020.

### BACKGROUND

Exemplary embodiments pertain to the art of fire detection systems, and more particularly to rail-mounted fire detection systems for, for example, a gas turbine engine.

Many structures and apparatus, such as gas turbine engines, utilize fire and over heat detection systems to monitor locations within the apparatus for fire and/or over heat conditions. Many such systems include a rail on which one or more sensors are located, a so-called rail-mounted fire detection system. The sensors utilize sensor tubes or conduits routed to cover various possible hot air leakage zones. The sensor tubes extend along the rail and are periodically secured to the rail along the rail length.

In a typical system, the sensor tubes are secured to the rail via a dual element clamp, which is welded to the rail. The assembly is subject to high levels of vibration during operation of the engine, which subjects the assembly to high stress levels. Such high stress levels results in failure at the weld location. Further, the assembly is complex and involves a high number of parts, and is further complex to manufacture. Finally, the multiple weld joins present along the rail can result in warping of the rail.

US 2020/064202 discloses a clamp fixture for sensors. US 2015/214702 discloses a detection-cord attachment device for an overheating and leak detection system on a gas pipe in an aircraft. US 2019/113391 discloses a rail-mounted fire detection system.

### BRIEF DESCRIPTION

In a first aspect of the present invention there is provided a rail and tube arrangement according to claim 1.

The grommet may be formed from one of an elastomeric, thermoplastic or rubber material.

Additionally or alternatively, in this or other embodiments the rail has a circular cross-section and the head portion has a complimentary partially circular cross-section.

Additionally or alternatively, in this or other embodiments the leg portions extend linearly from the head portion.

Additionally or alternatively, in this or other embodiments the support portions are curvilinear.

Additionally or alternatively, in this or other embodiments the one or more tubes are sensor tubes of a fire and overheat detection system.

Additionally or alternatively, in this or other embodiments the one or more fasteners is one or more bolts.

In a second aspect of the present invention there is provided a gas turbine engine according to claim 8.

The grommet may be formed from one of an elastomeric, thermoplastic or rubber material.

Additionally or alternatively, in this or other embodiments the rail has a circular cross-section and the head portion has a complimentary partially circular cross-section.

Additionally or alternatively, in this or other embodiments the leg portions extend linearly from the head portion.

Additionally or alternatively, in this or other embodiments the support portions are curvilinear.

Additionally or alternatively, in this or other embodiments the one or more fasteners is one or more bolts.

In a third aspect of the present invention there is provided a method of assembling a tube and rail arrangement according to claim 9.

The rail may have a circular cross-section and the head portion has a complimentary partially circular cross-section.

Additionally or alternatively, in this or other embodiments the leg portions extend linearly from the head portion.

Additionally or alternatively, in this or other embodiments the support portions are curvilinear.

### BRIEF DESCRIPTION OF THE DRAWINGS

The following descriptions should not be considered limiting in any way. With reference to the accompanying drawings, like elements are numbered alike:
FIG. 1 is a partial cross-sectional view of an embodiment of a gas turbine engine;
FIG. 2 is a perspective view of an embodiment of a rail and tube arrangement;
FIG. 3 is another perspective view of an embodiment of a rail and tube arrangement; and
FIG. 4 is a cross-sectional view of an embodiment of a rail and tube arrangement.

### DETAILED DESCRIPTION

A detailed description of one or more embodiments of the disclosed apparatus and method are presented herein by way of exemplification and not limitation with reference to the Figures.

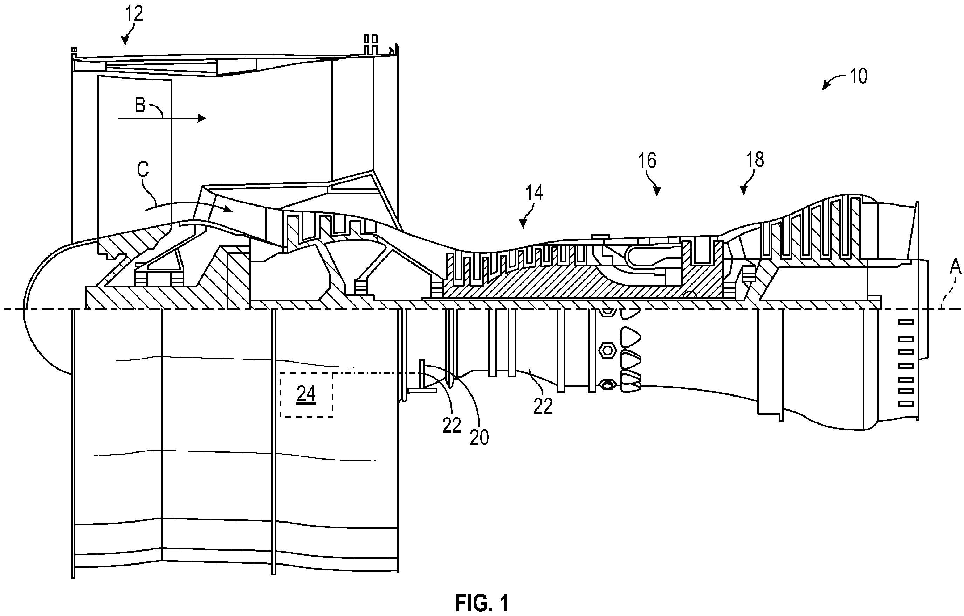

Shown in FIG 1 is an embodiment of a gas turbine engine 10. The gas turbine engine 10 is disclosed herein as a two-spool turbofan that generally incorporates a fan section 12, a compressor section 14, a combustor section 16 and a turbine section 18. Alternative engines might include an augmentor section (not shown) among other systems or features. The fan section 12 drives air along a bypass flow path B in a bypass duct, while the compressor section 14 drives air along a core flow path C for compression and communication into the combustor section 16 then expansion through the turbine section 18. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. A fire and overheat detection system (FODS) 20 is located at the gas turbine engine 10 and may be, for example, secured to a static structure of the gas turbine engine 10. The FODS 20 is configured such that sensor elements are exposed to fluid flow at or around the gas turbine engine 10 and detect a change in temperature of the fluid flow which may be indicative of a fire or overheat condition. The FODS 20 utilizes a plurality of sensor tubes 22 which are located throughout the gas turbine engine 10 to various possible hot air leakage zones of the gas turbine engine 10. The sensor tubes 22 are equipped with necessary technology to predict a temperature rise due to leakages and generate a signal indicating an unexpected temperature increase, which is output to, for example, an engine control system 24.

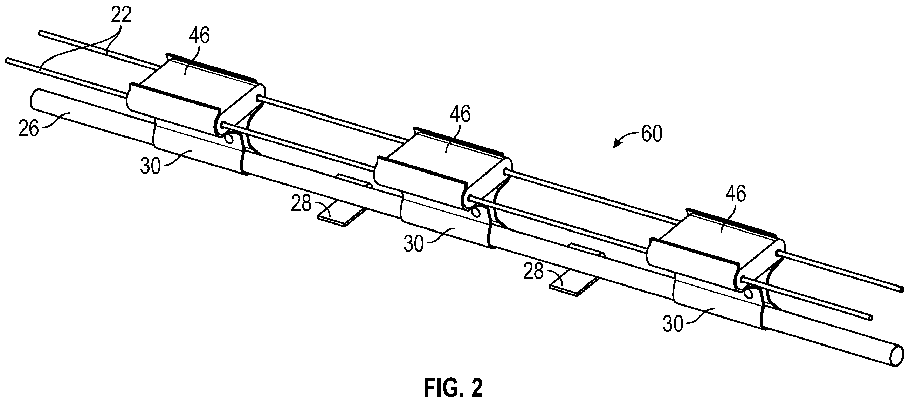

The sensor tubes 22 are arrayed along and supported by a rail 26, such as shown in more detail in FIG. 2. A plurality of rail supports 28 are secured to the rail 26 and are utilized to secure the rail 26 to the static structure of the gas turbine engine 10. A plurality of tube supports 30 are utilized to support the sensor tubes 22 at the rail 26.

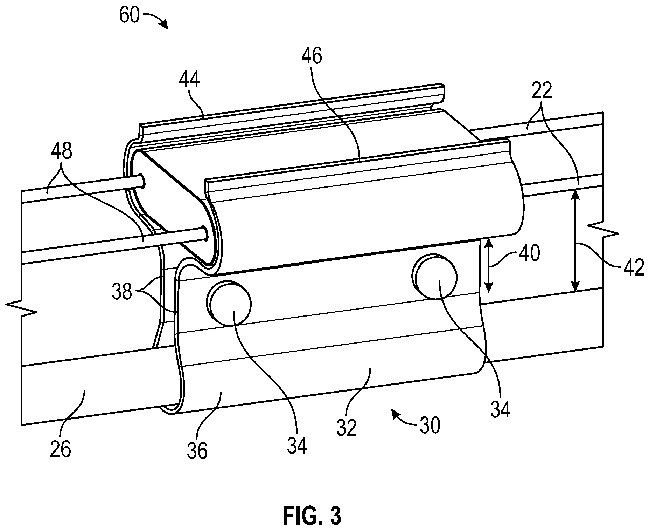

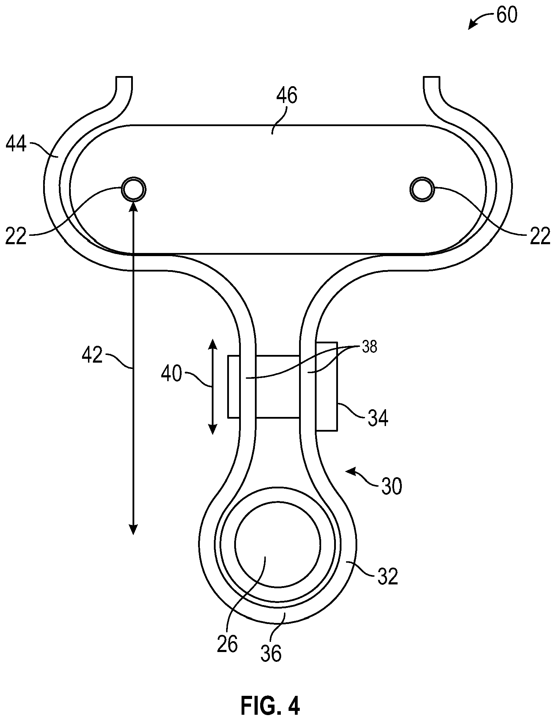

Referring now to FIGs. 3 and 4, an exemplary embodiment of a tube and rail assembly 60 is illustrated. The tube support 30 is, in some embodiments, formed from a metal material. The tube support 30 includes a support body 32, which wraps around the rail 26 and is secured at the rail 26 via a clamping force applied via one or more bolts 34 or other fasteners, such as screws or the like. More particularly, the support body 32 includes a head portion 36, which wraps at least partially around the rail 26, and two opposing leg portions 38 extending from the head portion 36. In some embodiments, such as shown, the rail 26 has a circular cross-section and the head portion 36 has a complimentary partially circular cross-section to locate and secure the tube support 30 at the rail 26. It is to be appreciated, however, that other rail 26 cross-sections, such as oval, polygonal or the like, and other complimentary head portion 36 cross-sections may be utilized.

While the head portion 36, such as illustrated, has a curvilinear cross-sectional shape, the leg portions 38 may be planar, extending linearly from the head portion 36 for a leg length 40. The leg length 40 is established to provide a selected tube offset 42 between the sensor tubes 22 and the rail 26. A support portion 44 of the tube support 30 extends from each of the leg portions 38. The support portions 44 as shown are shaped and configured to retain a support grommet 46 located between opposing support portions 44. The sensor tubes 22 pass through grommet openings 48 in the support grommet 46, and the support grommet 46 is formed and configured to isolate the sensor tubes 22 from external vibrational forces due to engine operation. In some embodiments, the support grommet 46 is formed from, for example, an elastomeric or rubber material, but support grommets 46 formed from other materials, such as a thermoplastic material, for example, PTFE, are contemplated within the scope of the present invention. In some embodiments, the support grommet 46 is a partially rectangular cross-sectional shape such as shown in the illustrated embodiment, other shapes of support grommets 46 such as circular, polygonal or the like, are contemplated within the scope of the present invention. Further, while two sensor tubes 22 are illustrated in the assembly shown herein, other quantities of sensor tubes 22, such as one, three or more sensor tubes 22 may be routed through the support grommet 46.

As stated above, the one or more bolts 34 are utilized to secure the tube support 30 at the rail 26. In particular, the bolts 34 are installed through the opposing leg portions 38 of the tube support 30. The tightening of the bolts 34 at the leg portions 38 applies a clamping force at the leg portions 38, drawing the leg portions 38 toward each other. This clamping force, in turn, brings the head portion 36 into frictional contact with the rail 26 to secure the tube support 30 at the rail 26 via the frictional contact between the rail 26 and the head portion 36. Utilizing the bolts 34 to secure the tube support 30 to the rail 26 allows for adjustment of the position of the tube support 30 along the rail 26 simply by loosening the bolts 34 and sliding the tube support 30 along the rail 26 to a new position. The bolts 34 are then tightened to secure the tube support 30 to the rail 26 at the new position.

Installation of the bolts 34 in the leg portions 38 further acts to secure the support grommet 46 between the opposing support portions 44. The tightening of the bolts 34 at the leg portions 38 applies the clamping force at the leg portions 38, drawing the leg portions 38 toward each other. This clamping force, in turn, brings the opposing support portions 44 into frictional contact with the support grommet 46 to secure the support grommet 46 between the opposing support portions 44 via the frictional contact between the support grommet 46 and the support portions 44.

The tube and rail assembly 60 of the present invention improves capability of withstanding vibrational forces when compared to typical configurations. The tube and rail assembly 60 is a modular configuration that is readily adaptable for multiple applications, of which FODS 20 is an example. The positions of the tube supports 30 along the rail are readily adjustable based on application and engine mount requirements, and ease of assembly is improved over the typical welded configuration. The configuration allows for supporting multiple sensor tubes 22 at the tube support 30 via a single support grommet 46, and reduced the number of parts in the assembly, providing cost and weight reduction benefits.

The term "about" is intended to include the degree of error associated with measurement of the particular quantity based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment, it is intended that the present invention not be limited to the particular embodiment disclosed as the best mode contemplated for carrying out the present invention, but that the present invention will include all embodiments falling within the scope of the appended claims.

## Claims

1. A rail and tube arrangement (60) for a fire and overheat detection system (20) of a gas turbine engine, comprising:
a rail (26);
one or more tubes (22) spaced apart from the rail (26); and
one or more tube supports (30) configured to support the one or more tubes (22) at the rail (26), the arrangement **characterized by**
each tube support (30) including:
a head portion (36) wrapped at least partially around the rail (26);
two opposing leg portions (38) extending from the head portion (36);
a support portion (44) extending from each leg portion (38) of the two opposing leg portions (38), the one or more tubes (22) disposed between the support portions (44);
one or more fasteners extending through the two opposing leg portions (38) applying a clamping force to the two opposing leg portions (38) thereby securing the tube support (30) to the rail (26), and retaining the one or more tubes (22) between the support portions (44); and
a grommet (46) disposed between and retained between the two support portions (44), the one or more tubes (22) extending through the grommet (46).

2. The rail and tube arrangement (60) of claim 1, wherein the grommet (46) is formed from one of an elastomeric or rubber material.

3. The rail and tube arrangement (60) of claim 1 or 2, wherein the rail (26) has a circular cross-section and the head portion (36) has a complimentary partially circular cross-section.

4. The rail and tube arrangement (60) of any preceding claim, wherein the leg portions (38) extend linearly from the head portion (36).

5. The rail and tube arrangement (60) of any preceding claim, wherein the support portions (44) are curvilinear.

6. The rail and tube arrangement (60) of any preceding claim, wherein the one or more tubes (22) are sensor tubes of a fire and overheat detection system (20).

7. The rail and tube arrangement (60) of any preceding claim, wherein the one or more fasteners is one or more bolts (34).

8. A gas turbine engine (10), comprising:
a combustor section (16);
a turbine section (18) driven by combustion products of the combustor section (16); and
a fire and overheat detection system (20) including the rail and tube arrangement (60) of any preceding claim, wherein said one or more tubes (22) are one or more sensor tubes (22) configured to predict a temperature rise due to leakages and generate a signal indicating an unexpected temperature increase.

9. A method of assembling a tube and rail arrangement (60) for a fire and overheat detection system (20) of a gas turbine engine, comprising:
providing one or more tube supports (30);
locating one or more tubes (22) spaced apart from a rail (26);
the method **characterized by** sliding the one or more tube supports (30) onto the rail (26), each tube support (30) including:
a head portion (36) wrapped at least partially around the rail (26);
two opposing leg portions (38) extending from the head portion (36);
a support portion (44) extending from each leg portion (38) of the two opposing leg portions (38), the one or more tubes (22) disposed between the support portions (44);
installing one or more fasteners through the opposing leg portions (38), thereby applying a clamping force to the two opposing leg portions (38) thereby securing the tube support (30) to the rail (26), and retaining the one or more tubes (22) between the support portions (44); and
installing a grommet (46) between the two support portions (44), the one or more tubes (22) extending through the grommet (46).

10. The method of claim 9, wherein the rail (26) has a circular cross-section and the head portion (36) has a complimentary partially circular cross-section.

11. The method of claim 9 or 10, wherein the leg portions (38) extend linearly from the head portion (36).

12. The method of any one of claims 9-11, wherein the support portions (44) are curvilinear.

## Patentansprüche

1. Schienen- und Rohranordnung (60) für ein Feuer- und Überhitzungserkennungssystem (20) eines Gasturbinentriebwerks, umfassend:
eine Schiene (26);
ein oder mehrere Rohre (22), die von der Schiene (26) beabstandet sind; und
eine oder mehrere Rohrstützen (30), die dazu konfiguriert sind, das eine oder die mehreren Rohre (22) an der Schiene (26) zu stützen, wobei die Anordnung **dadurch gekennzeichnet ist, dass** jede Rohrstütze (30) Folgendes beinhaltet:
einen Kopfteil (36), der mindestens teilweise um die Schiene (26) gewickelt ist;
zwei gegenüberliegende Schenkelteile (38), die sich von dem Kopfteil (36) erstrecken;
einen Stützteil (44), der sich von jedem Schenkelteil (38) der zwei gegenüberliegenden Schenkelteile (38) erstreckt, wobei das eine oder die mehreren Rohre (22) zwischen den Stützteilen (44) angeordnet sind;
ein oder mehrere Befestigungselemente, die sich durch die zwei gegenüberliegenden Schenkelteile (38) erstrecken und eine Klemmkraft auf die zwei gegenüberliegenden Schenkelteile (38) ausüben, wodurch die Rohrstütze (30) an der Schiene (26) gesichert wird und das eine oder die mehreren Rohre (22) zwischen den Stützteilen (44) festgehalten werden; und
eine Dichtungshülse (46), die zwischen den zwei Stützteilen (44) angeordnet ist und festgehalten wird, wobei sich das eine oder die mehreren Rohre (22) durch die Dichtungshülse (46) erstrecken.

2. Schienen- und Rohranordnung (60) nach Anspruch 1, wobei die Dichtungshülse (46) aus einem Elastomer- oder Gummimaterial gebildet ist.

3. Schienen- und Rohranordnung (60) nach Anspruch 1 oder 2, wobei die Schiene (26) einen kreisförmigen Querschnitt aufweist und der Kopfteil (36) einen komplementären teilweise kreisförmigen Querschnitt aufweist.

4. Schienen- und Rohranordnung (60) nach einem der vorhergehenden Ansprüche, wobei sich die Schenkelteile (38) linear von dem Kopfteil (36) erstrecken.

5. Schienen- und Rohranordnung (60) nach einem der vorhergehenden Ansprüche, wobei die Stützteile (44) kurvenförmig sind.

6. Schienen- und Rohranordnung (60) nach einem der vorhergehenden Ansprüche, wobei das eine oder die mehreren Rohre (22) Sensorrohre eines Feuer- und Überhitzungserkennungssystems (20) sind.

7. Schienen- und Rohranordnung (60) nach einem der vorhergehenden Ansprüche, wobei das eine oder die mehreren Befestigungselemente ein oder mehrere Bolzen (34) sind.

8. Gasturbinentriebwerk (10), umfassend:
einen Brennkammerabschnitt (16);
einen Turbinenabschnitt (18), der durch Verbrennungsprodukte des Brennkammerabschnitts (16) angetrieben wird; und
ein Feuer- und Überhitzungserkennungssystem (20), das die Schienen- und Rohranordnung (60) nach einem der vorhergehenden Ansprüche beinhaltet, wobei das eine oder die mehreren Rohre (22) ein oder mehrere Sensorrohre (22) sind, die dazu konfiguriert sind, einen Temperaturanstieg aufgrund von Leckagen vorherzusagen und ein Signal zu erzeugen, das eine unerwartete Temperaturerhöhung anzeigt.

9. Verfahren zum Zusammenfügen einer Schienen- und Rohranordnung (60) für ein Feuer- und Überhitzungserkennungssystem (20) eines Gasturbinentriebwerks, umfassend:
Bereitstellen einer oder mehrerer Rohrstützen (30);
Platzieren eines oder mehrerer Rohre (22) beabstandet von einer Schiene (26);
wobei das Verfahren **dadurch gekennzeichnet, ist dass** die eine oder mehreren Rohrstützen (30) auf die Schiene (26) geschoben werden, wobei jede Rohrstütze (30) Folgendes beinhaltet:
einen Kopfteil (36), der mindestens teilweise um die Schiene (26) gewickelt ist;
zwei gegenüberliegende Schenkelteile (38), die sich von dem Kopfteil (36) erstrecken;
einen Stützteil (44), der sich von jedem Schenkelteil (38) der zwei gegenüberliegenden Schenkelteile (38) erstreckt, wobei das eine oder die mehreren Rohre (22) zwischen den Stützteilen (44) angeordnet sind;
Installieren von einem oder mehreren Befestigungselementen durch die gegenüberliegenden Schenkelteile (38), wodurch eine Klemmkraft auf die zwei gegenüberliegenden Schenkelteile (38) ausgeübt wird, wodurch die Rohrstütze (30) an der Schiene (26) gesichert wird und das eine oder die mehreren Rohre (22) zwischen den Stützteilen (44) festgehalten werden; und
Installieren einer Dichtungshülse (46) zwischen den zwei Stützteilen (44), wobei sich das eine oder die mehreren Rohre (22) durch die Dichtungshülse (46) erstrecken.

10. Verfahren nach Anspruch 9, wobei die Schiene (26) einen kreisförmigen Querschnitt aufweist und der Kopfteil (36) einen komplementären teilweise kreisförmigen Querschnitt aufweist.

11. Verfahren nach Anspruch 9 oder 10, wobei sich die Schenkelteile (38) linear von dem Kopfteil (36) erstrecken.

12. Verfahren nach einem der Ansprüche 9-11, wobei die Stützteile (44) kurvenförmig sind.

## Revendications

1. Ensemble rail et tube (60) pour un système de détection d'incendie et de surchauffe (20) d'un moteur à turbine à gaz, comprenant :
un rail (26) ;
un ou plusieurs tubes (22) espacés du rail (26) ; et
un ou plusieurs supports de tube (30) configurés pour supporter les un ou plusieurs tubes (22) au niveau du rail (26), l'ensemble étant **caractérisé par le fait que** chaque support de tube (30) comporte :
une partie de tête (36) enroulée au moins partiellement autour du rail (26) ;
deux parties de jambe opposées (38) s'étendant à partir de la partie de tête (36) ;
une partie de support (44) s'étendant à partir de chaque partie de jambe (38) des deux parties de jambe opposées (38), les un ou plusieurs tubes (22) étant disposés entre les parties de support (44) ;
une ou plusieurs attaches s'étendant à travers les deux parties de jambe opposées (38) appliquant une force de serrage aux deux parties de jambe opposées (38), fixant ainsi le support de tube (30) au rail (26), et retenant les un ou plusieurs tubes (22) entre les parties de support (44) ; et
un passe-fil (46) disposé entre et retenu entre les deux parties de support (44), les un ou plusieurs tubes (22) s'étendant à travers le passe-fil (46).

2. Ensemble rail et tube (60) selon la revendication 1, dans lequel le passe-fil (46) est formé à partir d'un matériau élastomère ou caoutchouc.

3. Ensemble rail et tube (60) selon la revendication 1 ou 2, dans lequel le rail (26) a une section transversale circulaire et la partie de tête (36) a une section transversale complémentaire partiellement circulaire.

4. Ensemble rail et tube (60) selon une quelconque revendication précédente, dans lequel les parties de jambe (38) s'étendent linéairement à partir de la partie de tête (36).

5. Ensemble rail et tube (60) selon une quelconque revendication précédente, dans lequel les parties de support (44) sont curvilignes.

6. Ensemble rail et tube (60) selon une quelconque revendication précédente, dans lequel les un ou plusieurs tubes (22) sont des tubes de capteur d'un système de détection d'incendie et de surchauffe (20).

7. Ensemble rail et tube (60) selon une quelconque revendication précédente, dans lequel les une ou plusieurs attaches sont un ou plusieurs boulons (34).

8. Moteur à turbine à gaz (10), comprenant :
une section de chambre de combustion (16) ;
une section de turbine (18) entraînée par les produits de combustion de la section de chambre de combustion (16) ; et
un système de détection d'incendie et de surchauffe (20) comportant l'ensemble rail et tube (60) selon une quelconque revendication précédente, dans lequel lesdits un ou plusieurs tubes (22) sont un ou plusieurs tubes de capteur (22) configurés pour prédire une augmentation de température due à des fuites et pour générer un signal indiquant une augmentation inattendue de la température.

9. Procédé d'assemblage d'un ensemble rail et tube (60) pour un système de détection d'incendie et de surchauffe (20) d'un moteur à turbine à gaz, comprenant :
la fourniture d'un ou de plusieurs supports de tube (30) ;
la localisation d'un ou plusieurs tubes (22) espacés d'un rail (26) ;
le procédé étant **caractérisé par** le coulissement des un ou plusieurs supports de tube (30) sur le rail (26), chaque support de tube (30) comportant :
une partie de tête (36) enroulée au moins partiellement autour du rail (26) ;
deux parties de jambe opposées (38) s'étendant à partir de la partie de tête (36) ;
une partie de support (44) s'étendant à partir de chaque partie de jambe (38) des deux parties de jambe opposées (38), les un ou plusieurs tubes (22) étant disposés entre les parties de support (44) ;
l'installation d'une ou de plusieurs attaches à travers les parties de jambe opposées (38) appliquant ainsi une force de serrage aux deux parties de jambe opposées (38), fixant ainsi le support de tube (30) au rail (26), et retenant les un ou plusieurs tubes (22) entre les parties de support (44) ; et
l'installation d'un passe-fil (46) entre les deux parties de support (44), les un ou plusieurs tubes (22) s'étendant à travers le passe-fil (46).

10. Procédé selon la revendication 9, dans lequel le rail (26) a une section transversale circulaire et la partie de tête (36) a une section transversale complémentaire partiellement circulaire.

11. Procédé selon la revendication 9 ou 10, dans lequel les parties de jambe (38) s'étendent linéairement à partir de la partie de tête (36).

12. Procédé selon l'une quelconque des revendications 9 à 11, dans lequel les parties de support (44) sont curvilignes.
